# EUROPEAN PATENT APPLICATION

(11) **EP 4 793 030 A2**
(43) Date of publication of application: **19.08.2026**
(21) Application number: 26151001.0
(22) Date of filing: 09.01.2026
(51) Int. Cl.: B29D 30/06

(54) **BLADDERLESS TIRE CURING METHODS**

(30) Priority: 27.01.2025 US 202519037404
(71) Applicant: The Goodyear Tire & Rubber Company, Akron, OH 44316 (US)
(72) Inventor: LIANG, Xuan, Akron, 44316 (US); SMITH, Michael Gordon, Akron, 44316 (US)
(74) Representative: Kutsch, Bernd

(57) **Abstract**

In one aspect of the invention, a tire curing method is disclosed comprising: engaging at least a portion of a first bead engaging projection (20) with a first tire bead (205) of a green tire (200) and engaging at least a portion of a second bead engaging projection (20) with a second tire bead (206) of the green tire (200); providing at least one pump in fluid communication with a chamber (150) defined by an inner surface (202) of the green tire (200) and the first and second bead engaging projections (20), the at least one pump being configured to circulate a heated fluid through the chamber (150); causing the at least one pump to circulate the heated fluid through the chamber (150) such that the heated fluid flows through the chamber (150) at a flow rate for a period of time; and at least partially curing the green tire (200) using the heated fluid flowing through the chamber (150).

## Description

### BACKGROUND

Many tire curing processes involve using a bladder or other expansion vessel that is pressurized against an interior of a green tire carcass to form the tire tread and other aspects of the tire using a mold. When using a pressurized bladder, it may be necessary to preheat the bladder and reheat the bladder between moldings.

### SUMMARY OF THE INVENTION

The invention relates to a method in accordance with claim 1, 6 or 11, respectively. Dependent claims refer to preferred embodiments of the invention.

### BRIEF DESCRIPTION OF THE DRAWINGS

Many aspects of the present invention may be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1 is a side cutaway view of a tire with respective bead portions of the tire engaging respective upper and lower bead engaging projections in accordance with the present invention.
FIG. 2 is a perspective cross-sectional view of the tire mold shown in FIG. 1 with a tire therein according to the present invention.
FIG. 3 is a perspective cross-sectional view of a tire and bead engaging projection within the tire mold shown in FIG. 1 according to the present invention.
FIG. 4 is a side cutaway view of a tire mold in a tire press according to the present invention.
FIGS. 5-6 are side cutaway views of a tire mold in a tire press according to the present invention.
FIG. 7 is a process for curing a tire in accordance with the present invention.
FIG. 8 is a process for engaging an upper and lower bead engaging projection against respective bead portions of a tire according to the present invention.
FIG. 9 is a graphical representation of a change in internal chamber temperature of a tire during curing according to the present invention.
FIG. 10 is a graphical representation of a change in internal chamber temperature of a tire during curing and nitrogen flow rate according to the present invention.
FIG. 11 is a graphical representation of an exemplary change in internal chamber temperature of a tire during curing and nitrogen flow rate according to the present invention.

### DEFINITIONS

Bead" means that part of the tire comprising an annular tensile member wrapped by ply cords and shaped, with or without other reinforcement elements such as flippers, chippers, apexes, toe guards and chafers, to fit the design rim.

"Carcass" means the tire structure apart from the belt structure, tread, undertread, and sidewall rubber over the plies, but including the beads.

"Curing" means the process of heating or otherwise treating a rubber or plastic compound to convert it from a thermoplastic or fluid material into a solid, relatively heat-resistant state by causing cross-linking of the compound. When heating is employed, the process may be called vulcanization.

"Elastomer" means a resilient material capable of recovering size and shape after deformation.

"Inner liner" means the layer or layers of elastomer or other material that form the inside surface of a tubeless tire and that contain the inflating fluid within the tire.

"Radial" and "radially" mean lines or directions that are perpendicular to the axis of rotation of the tire.

"Radially outward" and "radially outwardly" refer to a radial direction that is away from the central axis of rotation of the tire.

"Tread element" or "traction element" means a rib or a block element defined by a shape having adjacent grooves.

### DETAILED DESCRIPTION OF PREFERRED EMBODIMENTS OF THE INVENTION

Various examples now will be described more fully hereinafter with reference to the accompanying drawings. It should be understood that the invention is embodied in many different forms and should not be construed as limited to the examples set forth herein. Rather, these examples are provided so that this invention will be thorough and complete, and will fully convey the scope of the invention to those skilled in the art. Like figure reference numerals refer to like elements throughout.

The present invention sets forth tire curing equipment and/or tire curing processes for curing a green tire. A curing process involves applying a radially outward pressure directly against a radially inner surface of a green tire carcass to engage the green tire carcass with a tire mold to form the final tire configuration and tread pattern. The process utilizes a pressurized, heated fluid to apply radially outward pressure against the radially inner surface of the green tire carcass. The process involves injecting such a pressurized, heated fluid within a sealed inner chamber of the green tire, where the seal is created by the interaction of a suitable sealing ring with each of the bead portions of the tire.

Preferably, the processes in accordance with the invention do not utilize a bladder or other expansion vessel for housing a pressurized, heated fluid such that a green tire is exposed to the fluid.

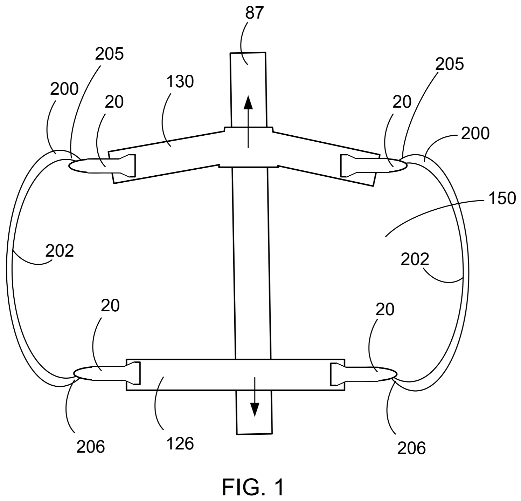

FIG. 1 depicts a side cutaway view of an exemplary tire 200 with an upper and lower bead engaging projection 20 engaging respective bead portions 205, 206 of the tire 200 according to various examples of the present invention. A process for curing a green tire may utilize the engagement of the tire 200 with respective sealing rings or other suitable mechanism for engaging a circumference of respective bead positions 205, 206 of the tire 200. In the example shown in FIG. 1, the sealing rings comprise respective bead engaging projections 20. In still other examples, the sealing rings can include any other suitable mechanism or mechanisms for at least substantially fluidly sealing each of the upper bead 205 and lower bead 206 of the tire 200 to form the chamber 150 described herein.

In some examples in which the sealing rings include bead engaging projections, each bead engaging projection 20 is substantially ring-shaped and extends radially outward from a center mechanism 87. In some examples, the center mechanism 87 is part of a tire curing press or other piece of tire curing equipment. An upper bead engaging projection 20 is supported by an upper clamp ring 130 configured to translate along a longitudinal axis of the center mechanism 87. A lower bead engaging projection 20 is supported by a lower clamp ring 126 configured to translate along the longitudinal axis of the center mechanism 87. Translation of the upper and/or lower bead engaging projections 20 relative to the longitudinal axis of the center mechanism 87 enables the sealing of the bead engaging projections 20 against respective portions of the bead portions of the tire 200.

Although various examples of sealing rings herein refer to bead engaging projections 20, it should be understood that other examples of a sealing ring or engaging mechanism may be configured to engage any other suitable portion of a tire 200 in order to form the chamber 150 described herein. In still other examples, a sealing ring or engaging mechanism may have any other suitable shape or profile.

Sealing each of the beads of the tire 200 against respective sealing rings, for example, forms a chamber 150. In some examples, the formation of the chamber 150 facilitates a tire-curing process that does not incorporate a bladder or other expansion vessel used in traditional tire curing processes. In this way, the present invention may include processes in which a pressurized, heated fluid applies a radially outward pressure directly against a radially inner surface of the green tire carcass without any intervening material. That is to say, the pressurized, heated fluid interacts directly with an inner liner or inner surface 202 of the tire 200.

Processes that eliminate the need for a bladder or other expansion vessel may, for example, reduce the need to perform certain preparation steps on a bladder or other expansion vessel prior to and/or between green tire curing such as during pre-heating of the bladder, reheating of the bladder, replacement of the bladder, or other steps. In addition, situations in which a bladder material might stick to the inner liner 202 of the tire 200 are avoided.

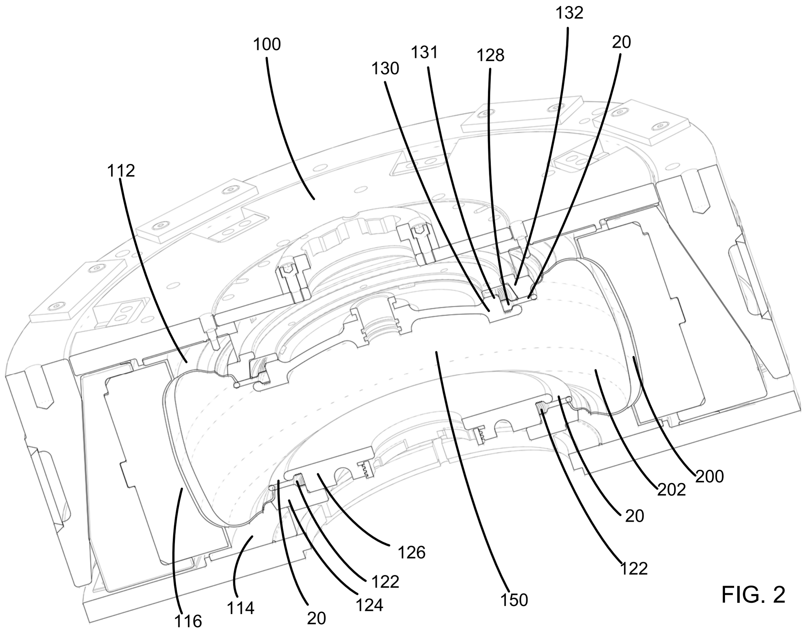

FIG. 2 depicts a perspective cross-sectional view of a tire mold 100 that includes a green tire carcass 200 therein. In the example shown, the tire mold 100 includes any suitable tire mold 100 such as a two-piece mold, a segmented mold, or other type of mold. In any example described herein, the tire mold 100 is used in conjunction with a suitable tire curing press to create a seal by virtue of the interaction of the tire mold within the curing press. As shown in FIG. 2, the tire mold 100 is interacting with a portion of tire curing equipment, such as a portion of a tire press. In the example shown in this figure, the tire mold 100 includes an upper mold plate 112, a lower mold plate 114, and a plurality of tread segments 116 that may include tread elements and other elements. Radially outward pressure against an inner liner 202 of a green tire 200 disposed within the tire mold 100 may impart a tread pattern defined by the plurality of tread segments against the tread portion of the green tire. For example, green rubber that makes up the green tire 200 may flow by virtue of a heated gas in the chamber 150 and is forced by the internal pressure that generates a radially outward force into mold elements of the plurality of tread segments 116 and other portions of the tire mold 100 to form the tire.

The tire curing equipment that interacts with the tire mold 100 may, for example, comprise a lower lock ring 124 and a lower clamp ring 126. The tire curing equipment further comprises an upper clamp ring 130 and a first and second upper clamp ring 131, 132. In the example shown in FIG. 2, the tire curing equipment comprises an upper and lower bead engaging projection 20.

As may be understood from FIG. 2, each of the upper and lower bead engaging projections 20 may be substantially ring-shaped and extend radially outward from respective proximal ends 122, 128 around a circumference of the tire curing equipment. A substantially ring-shaped bead engaging projection 20 may be exactly ring-shaped or may be mostly, but not exactly ring-shaped, for example, to account for manufacturing tolerances and other defects. Each of the bead engaging projections 20 may extend sufficiently outward from a central portion of the tire curing equipment to engage at least a portion of an upper bead 205 and lower bead 206 of the tire 200 when the tire 200 is disposed within the mold 100. During a curing process in which the tire 200 is disposed within the mold 100, the tire may be in a green state, a cured state, or in a transitional state between a green state and a cured state. In some examples, the respective bead engaging projections 20 engage the upper and lower bead of the tire throughout a curing process as the tire 200 transitions from a green state to a cured state.

A proximal portion 122 of the lower bead engaging projection 20 is clamped in place between the lower lock ring 124 and the lower clamp ring 126. In one example, the lower lock ring 124 and lower clamp ring 126 are integrally formed such that the lower lock ring 124 and the lower clamp ring 126 form a one-piece unit, collectively called a lower mold ring, although a configuration that comprises multiple pieces may be employed as well. A proximal end 128 of the upper bead engaging projection 20 is similarly clamped between the upper lock ring 130 and the first or second upper clamp ring 131, 132. In another example, the upper lock ring 130 and upper clamp ring 132 may be integrally formed into a one-piece unit, collectively called an upper mold ring. As may be understood form FIG. 2, each of the upper and lower bead engaging projections 20 are substantially circular, extending radially outward from their respective proximal ends 122, 128 and culminating in a distal end that is configured to engage at least a portion of an upper or lower bead of the tire 200. The bead engaging projections 20 may comprise end portions of a traditional tire-curing bladder, with the vessel portion of the bladder removed. In still other examples, the tire curing equipment may include any other clamping mechanism for at least substantially fluidly sealing each of the upper and lower bead of the tire 200 to form the chamber 150 described herein.

As shown in FIG. 2, the inner liner 202 of the tire 200, the upper and lower bead engaging projections 20, and at least a portion of the tire curing equipment such as the upper lock ring 130, the lower clamp ring 126, or other elements define a chamber 150. The chamber may be substantially fluidly sealed, which includes both entirely fluidly sealed and mostly fluidly sealed with one or more potential minor leaks. For example, the chamber may be sufficiently fluidly sealed such that a pressurized, heated fluid introduced to the chamber 150 applies a substantially consistent radially outward pressure against the inner liner 202. The radially outward pressure against the inner liner 202 may include a substantially consistent pressure that is proportional to a flow rate of the pressurized fluid through the chamber 150. In some examples, the chamber 150 is in fluid communication with one or more pumps configured to pump the fluid, which may include a gas, through the chamber 150. In some examples, the process further utilizes one or more heaters (not shown) in addition to one or more pumps to both heat and circulate the fluid at a desired rate and temperature. In some examples, the one or more pumps re-circulate the fluid, re-heating the fluid as necessary prior to re-introducing the fluid into the chamber 150. In this way, in some examples, the process utilizes a closed system that preserves the fluid to reduce and/or eliminate fluid waste.

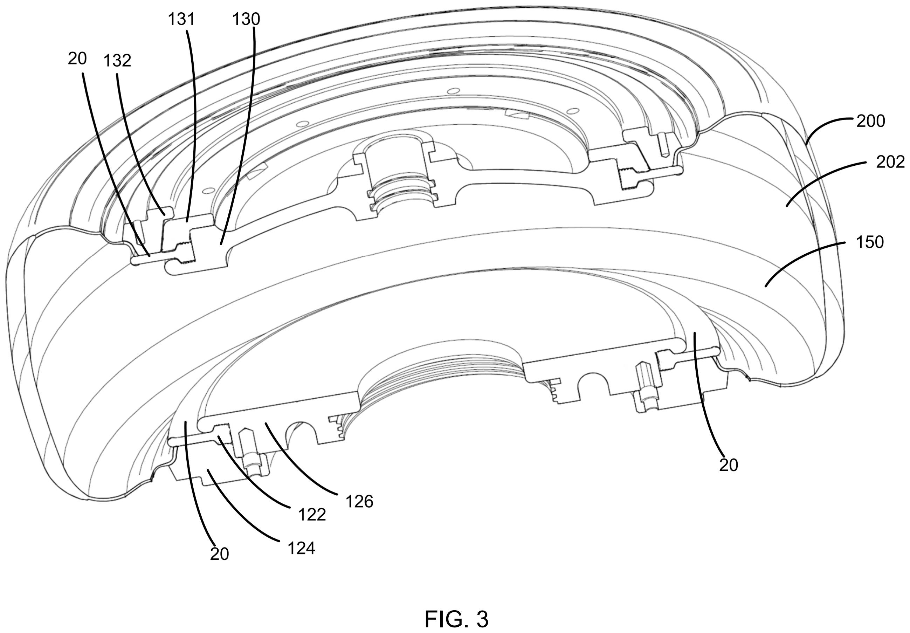

FIG. 3 depicts a cutaway view of a tire 200 in the tire mold 100 of FIG. 2 with an upper and lower bead engaged by respective portions of an upper and lower bead engaging projection 20 and a second portion of the tire curing equipment. The second portion of the tire curing equipment may include the upper clamp ring 132, lower clamp ring 126, or other suitable portion of the tire curing equipment. When the tire 200 is in the mold 100, at least a portion of each of the upper and lower bead 20 may be sandwiched between a distal end of each bead engaging projection 20 and at least a portion of the tire curing equipment. The tire curing equipment may include one or more temperature sensors (not shown) disposed within the chamber 150. The one or more temperature sensors may, for example, measure an internal chamber temperature of the green tire during a curing process. This may, for example, enable the process to determine that the internal chamber temperature reaches at least a target temperature to ensure adequate curing.

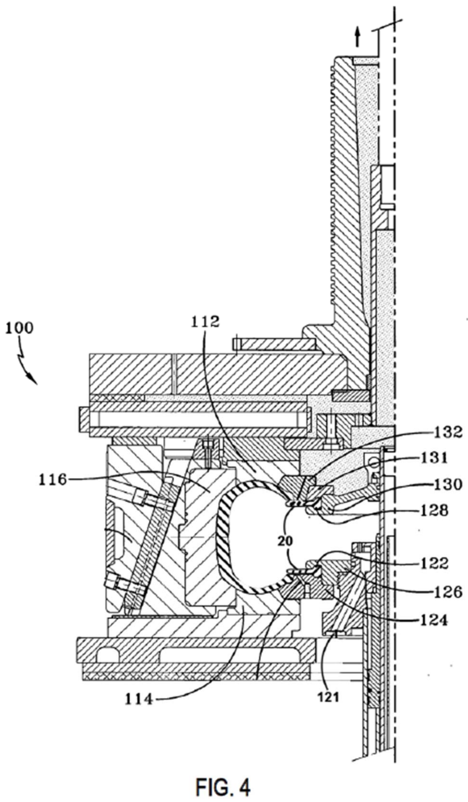

As may be understood from FIG. 4, when a pressurized fluid fills the chamber, the fluid exerts radially outward pressure directly against the inner liner 202 of the tire, without any bladder or other expansion vessel therebetween. As such, in some examples, the pressurized fluid comprises an inert gas to at least substantially prevent a negative or undesired interaction between the pressurized fluid and the green tire. Curing processes that use a bladder may, for example, use steam or other heated fluid that may have a negative interaction with the green tire if contacting the green tire directly. In such processes, the bladder itself may protect the green tire from contact with the heated fluid. As such, in a bladderless curing process, it may be desirable to use an inert gas, such as nitrogen, because the gas contacts the inner liner and other portions of the tire within the chamber during curing. In some examples, the pressurized fluid is introduced into the chamber 150 through an inlet channel 121, exiting through an exit channel (not shown). In various examples, each of the inlet and exit channels utilize one or more valves which may, in combination with the one or more pumps, operate to regulate a pressure within the chamber 150 by modifying a flow rate of the pressurized fluid through the chamber 150.

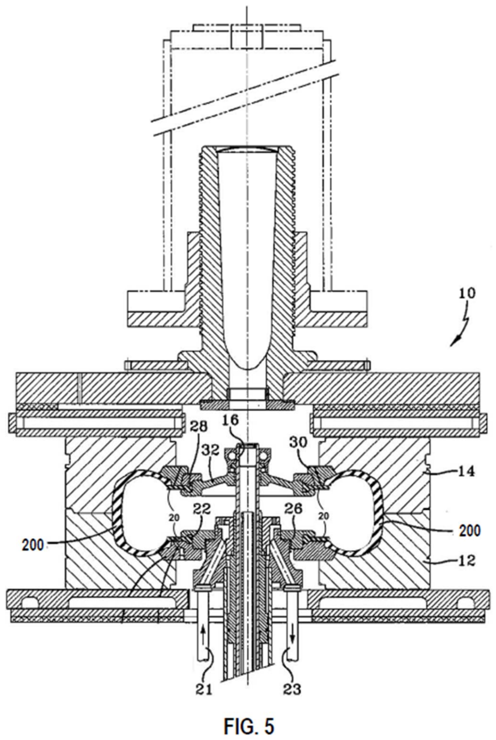

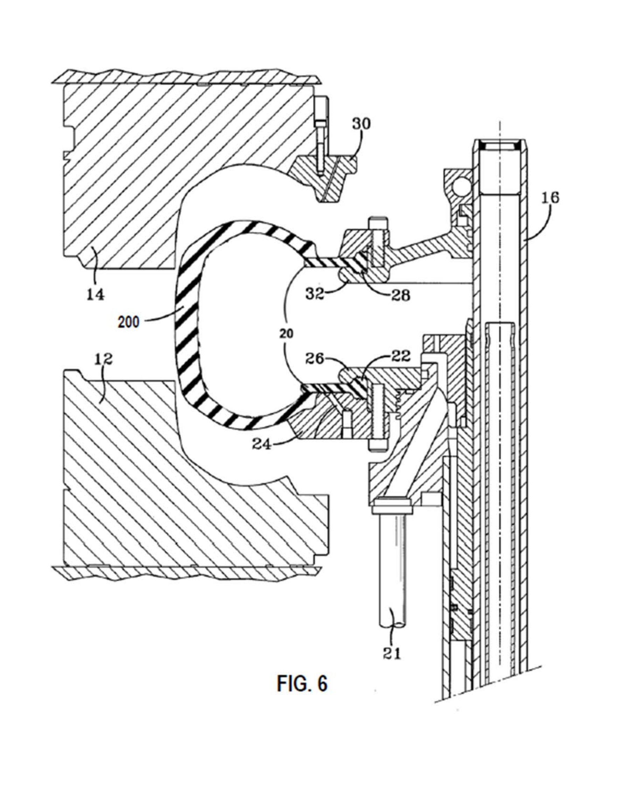

FIGS. 5-6 depict another example of a tire mold 10. In the example shown in these figures, the tire mold 10 may include a two-part tire mold. Similar to the mold 100 discussed above with respect to FIGS. 2-4, the tire mold 10 of FIGS. 5-6 interacts with tire curing equipment that comprises an upper and lower bead engaging projection 20. The tire curing equipment, for example, includes a central mechanism 16 that moves the upper and lower bead engaging projections 20 apart from one another to engage the upper and lower beads of the green tire 200. As shown in FIGS. 5 and 6, the pressurized fluid may be introduced into the chamber 150 through an inlet channel 21 and exits through an exit channel 23, via operation of one or more pumps, valves, or other components.

The tire mold 10 of FIGS. 5-6 includes a lower platen 12 and an upper platen 14. A proximal end 22 of a lower bead engaging projection 20 may be clamped in place between a lower lock ring 24 and lower clamp ring 26. A proximal end 28 of an upper bead engaging projection may be similarly clamped between an upper lock ring 30 and an upper clamp ring 32. As may be understood from FIGS. 5-6, each bead engaging projection 20 is substantially ring shaped and extends around a circumference of the tire mold 10.

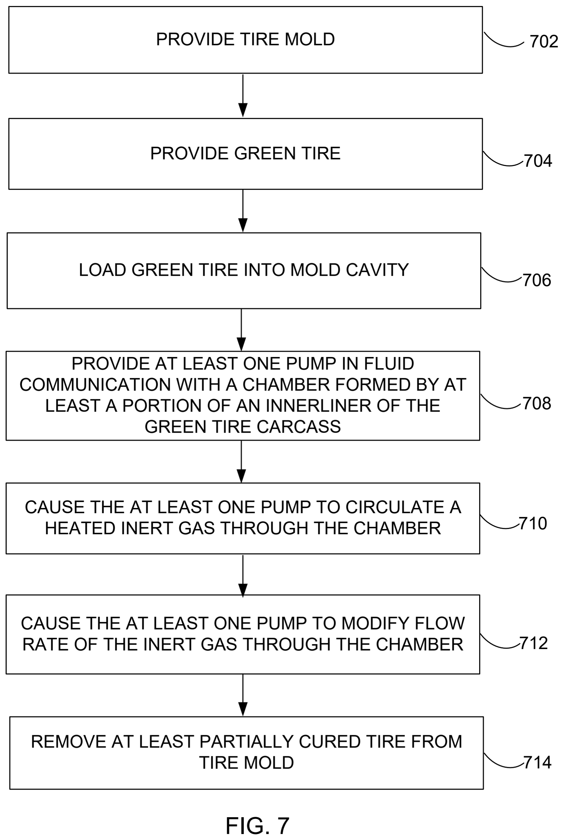

FIG. 7 depicts an exemplary process for curing a green tire without the use of a bladder in the curing process. It should be understood that the process may be performed in an order other than the order presented below. It should be further understood that certain steps described herein may be omitted, and additional steps may be performed.

As may be understood from FIG. 7, the process begins, for example, at step 702, providing a tire mold. The tire mold 100 may include any suitable tire mold described herein such as any tire mold shown and described with respect to FIGS. 1-6, or other tire mold. The process may further include providing other suitable tire curing equipment for use in combination with the tire mold. In some examples, providing the tire mold comprises at least providing a first and second bead engaging projection or other sealing ring or other suitable sealing mechanism. At least a portion of each of the first and second bead engaging projection 20 (FIG. 2) are configured to engage at least a portion of a respective tire bead of a green tire 200. The respective bead engaging projections 20 may cooperate with other portions of the tire mold 100 and/or tire curing equipment to place the respective tire beads in compression.

At step 704, the method includes providing a green tire 200. The green tire may comprise any suitable uncured tire. The green tire 200 may comprise at least a first tire bead 205, a second tire bead 206, and an inner liner 202.

At step 706, the method includes loading the green tire into the tire mold and/or tire curing equipment. In some examples, loading the green tire includes respectively engaging at least a portion of each of the first and second bead engaging projection 20 with at least a portion of each of the first tire bead 205 and second tire bead 206. In some examples, the first bead engaging projection 20 and the second bead engaging projection 20 form a seal against the first tire bead 205 and the second tire bead 206 to prevent a pressurized fluid from escaping between the first and second tire beads 205, 206 and the respective bead engaging projections 20. In this way, the inner liner 202 or other radially inner portion of the green tire 200, the first bead engaging projection 20, the second bead engaging projection 20, and at least a portion of the tire curing equipment may form a chamber 150 within at least a portion of the green tire carcass 200. In some examples, the chamber 150 is configured to receive a pressurized, heated fluid for at least partially curing the green tire 200 while the green tire 200 is in the mold 100.

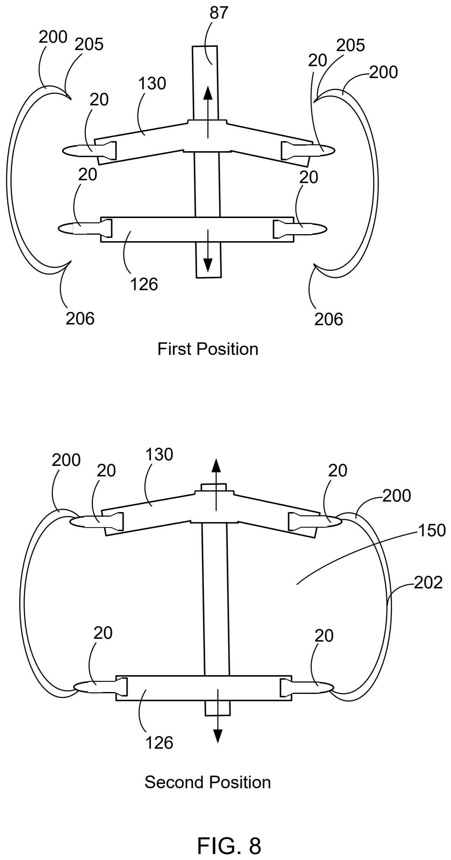

Turning to FIG. 8, an exemplary process for engaging respective bead engaging projections 20 against respective bead portions of a tire 200 is shown. As shown in FIG. 8, in a first position, an upper bead engaging projection 20 extends radially outward from a center mechanism 87. A lower bead engaging projection 20 extends radially outward from the center mechanism 87. In the first position, the upper bead engaging projection 20 is adjacent the lower bead engaging projection 20. The upper and lower bead engaging projections 20 are disposed within a green tire carcass 200 such that each of the upper and lower bead engaging projections are disposed between and spaced apart from the bead portions of the tire 200. In the process shown in FIG. 8, the upper and lower bead engaging projections 20 respectively engage a first tire bead 205 and second tire bead 206 of the tire 200 through translation of at least one of the upper bead engaging projection 20 and/or the lower bead engaging projection 20 along a longitudinal axis of the center mechanism.

One example of the process involves translating the upper bead engaging projection 20 along the longitudinal axis of the center mechanism 87 toward the first tire bead 205 to engage at least a portion of the first bead engaging projection 20 with the first tire bead 205. **In** other examples, the process involves translating the lower bead engaging projection 20 along the longitudinal axis of the center mechanism 87 toward the second tire bead 206 to engage at least a portion of the second bead engaging projection 20 with the second tire bead 206. In this way, the process involves spreading the upper and lower bead engaging projections 20 apart along the longitudinal axis of the center mechanism until each of the upper and lower bead engaging projections engages a respective bead portion of the tire. Engagement of the upper and lower bead engaging projections 20 with the respective bead portions 205, 206 establishes a seal the first and second tire beads 205, 206. As a result of the seal along each of the upper bead engaging projection 20 and lower bead engaging projection 20, the process forms a chamber 150 defined by the upper bead engaging projection 20, the lower bead engaging projection 20, and an inner surface of the tire 200.

Returning to FIG. 7, at step 708, the method includes providing at least one pump in fluid communication with the chamber 150. In some examples, the at least one pump is configured to circulate a suitable fluid through the chamber 150 at least at a particular flow rate. In some examples, the at least one pump is configured to cause a pressurized fluid to flow through the chamber 150. The pressurized heated fluid may comprise any suitable inert gas or other fluid that does not chemically react with a material that forms the portion of the green tire that the fluid contacts within the chamber 150. The fluid may include, for example, nitrogen, helium, neon, krypton, argon, xenon, radon, carbon dioxide, or other suitable nonreactive fluid. In some examples, the fluid includes any suitable noble gas. In still other examples, the fluid includes any suitable fluid that is not chemically reactive with rubber. The one or more pumps may comprise one or more heating elements for heating the fluid. The process may instead, or in addition to heating elements within the one or more pumps, utilize one or more separate heaters for heating the fluid.

At step 710, the process includes causing the at least one pump to circulate the heated inert gas through the chamber 150. The at least one pump may, for example, circulate the inert gas, such as nitrogen, through the chamber at a flow rate of between zero m³/h (cubic meters per hour) and 9.5 m³/h. In other examples, the at least one pump circulates the fluid through the chamber at a flow rate of up to 12 m³/h. In still other examples, the at least one pump circulates the fluid through the chamber at a flow rate of between 7 m³/h and 11 m³/h. The at least one pump may circulate the fluid, such as an inert gas, for a particular period of time. For example, the at least one pump may circulate the fluid at least until an internal chamber 150 of the green tire carcass 200 reaches a particular target temperature. The particular target temperature may, for example, be any temperature sufficient to cure the tire. The at least one pump may be part of a closed system that preserves the fluid to reduce and/or eliminate fluid waste.

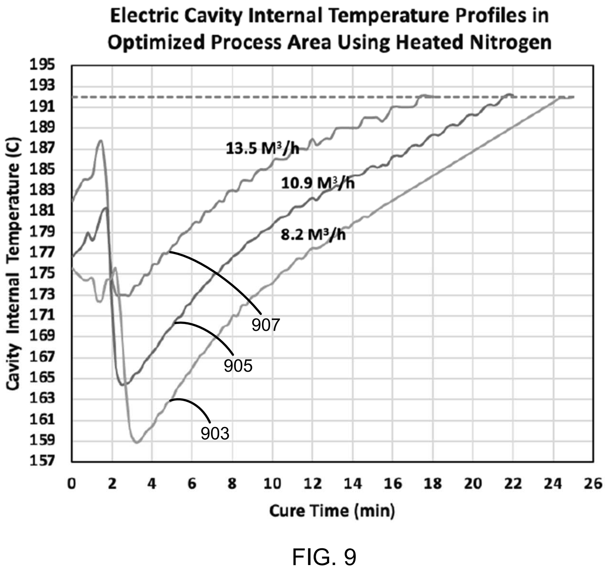

The at least one pump may, for example, circulate the heated inert gas for at least a first period of time. The first period of time may include at least enough time to allow the green tire to at least partially cure. The first period of time may depend on a circulation temperature of the heated fluid. FIG. 9, for example, depicts a chart showing a change in internal chamber temperature of a green tire using heated nitrogen as the heated fluid at different flow rates. The chart shown in FIG. 9 illustrates a change in internal temperature in degrees Celsius of a tire 200 over a cure time of the tire 200 in minutes. The first line 903 shows the temperature change over cure time at a volume flow rate of 8.2 cubic meters per hours. The second line 905 shows the temperature change over cure time at a volume flow rate of 10.9 cubic meters per hours. The third line shows the temperature change over cure time at a volume flow rate of 13.5 cubic meters per hours. As may be understood from FIG. 9, a greater flow rate of the heated fluid may impart a higher pressure within the chamber. The greater flow rate may decrease a cure time of a green tire, which may reduce a time taken for the internal chamber temperature to reach of target temperature of 192 degrees Celsius, for example.

With reference back to FIG. 7, at step 712, the process involves causing the at least one pump to modify the flow rate of the inert gas through the chamber. In some examples, the process involves causing the at least one pump to circulate the inert gas through the chamber at a first flow rate for a first length of time. The process may involve modifying the flow rate to a second flow rate for a second length of time.

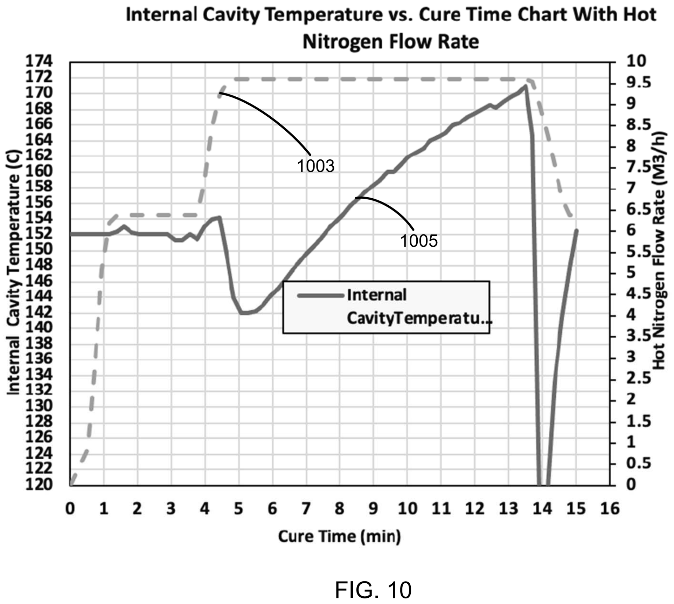

FIG. 10, for example, illustrates an example of a change in internal chamber temperature in degrees Celsius of a green tire using heated nitrogen as the heated fluid over a particular cure time in minutes. As may be understood from FIG. 10, the process may involve initially causing one or more pumps to circulate the heated nitrogen, according to line 1003, at a first flow rate (e.g., 6.5 m³/h) for a first period of time (e.g., four minutes), and then modifying the flow rate to a second flow rate (e.g., of 9.5 m³/h) for a second period of time (e.g., 10 minutes). As may be understood from FIG. 10, internal chamber temperature may, acceding to line 1005, initially plateau at the first flow rate, and then increase to a target temperature once the flow rate is modified. In this way, through changing the flow rate for different time periods, different curing results may be achieved.

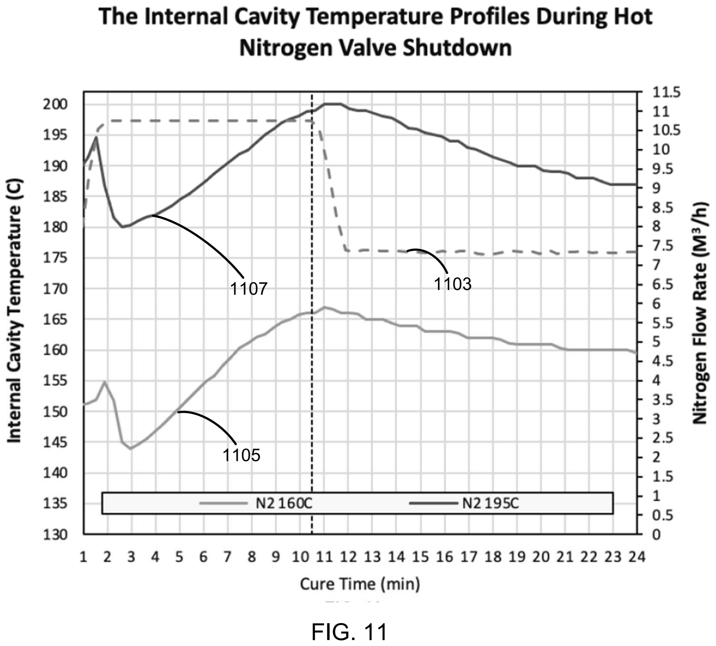

FIG. 11 depicts another exemplary internal chamber temperature profile in which a hot nitrogen flow is shut down after a first period of time. In the chart shown in FIG. 11, changes in chamber temperature in degrees Celsius and nitrogen flow rate in cubic meters per hour are depicted over cure time in minutes. As shown in this figure, after a first period of time (e.g., 10 minutes) nitrogen flow rate is reduced in line 1103 (e.g., from 10.7 m³/h to 7.5 m³/h) once an internal chamber temperature reaches a target temperature. In the example shown in line 1105, using Nitrogen as the heated fluid at 160 degrees Celsius, the target temperature is 166 degrees Celsius. In the example shown in line 1107, using Nitrogen as the heated fluid at1950 degrees Celsius, the target temperature is 200 degrees Celsius. The target temperature may differ for different temperature heated fluids. Modifying the flow rate may include cutting off the flow of inert gas through the chamber.

At step 714, the process involves removing the at least partially cured (e.g., cured) tire from the tire mold. The process may then be repeated with a new green tire carcass. As may be understood from the present invention, because a bladder is not utilized in the curing process, there may be no need to reheat a bladder, replace a bladder, or otherwise make any preparation that may be required in a curing process that utilizes a bladder prior to loading the next green tire.

## Claims

1. A tire curing method, the method comprising:
engaging at least a portion of a first bead engaging projection (20) with a first tire bead (205) of a green tire (200) and engaging at least a portion of a second bead engaging projection (20) with a second tire bead (206) of the green tire (200);
providing at least one pump in fluid communication with a chamber (150) defined by an inner surface (202) of the green tire (200) and the first and second bead engaging projections (20), the at least one pump being configured to circulate a heated fluid through the chamber (150);
causing the at least one pump to circulate the heated fluid through the chamber (150) such that the heated fluid flows through the chamber (150) at a flow rate for a period of time; and
at least partially curing the green tire (200) using the heated fluid flowing through the chamber (150).

2. The method of claim 1, further comprising causing the at least one pump to modify the flow rate to a second flow rate for a second period of time, wherein the second flow rate is preferably at least one of less than the flow rate or a substantially zero flow rate or a zero flow rate.

3. The method of claim 1 or 2, wherein the flow rate is between six cubic meters per hour and eleven cubic meters per hour; and/or the second flow rate is between nine cubic meters per hour and ten cubic meters per hour.

4. The method of at least one of the previous claims, further comprising using at least one temperature sensor to measure a temperature of the chamber (150), and, optionally, wherein the period of time is defined by the temperature of the chamber (150).

5. The method of at least one of the previous claims, further comprising:
using at least one temperature sensor to measure a chamber temperature of the green tire (200); and
curing the green tire (200) at least until the chamber temperature reaches a target chamber temperature.

6. A tire curing process, the process comprising:
providing a first bead engaging projection (20) and a second bead engaging projection (20);
providing a green tire (200) comprising a first tire bead (205), a second tire bead (206), and an inner surface (202);
engaging at least a portion of a first bead engaging projection (20) with a first tire bead (205) of a green tire (200) and engaging at least a portion of a second bead engaging projection (20) with a second tire bead (206) of the green tire (200) such that a seal is established about a circumference of the first and second tire beads (205, 206), respectively, and a chamber (150) is formed by the first and second bead engaging projections (20) and an inner surface (202) of the green tire (200);
causing at least one pump in fluid communication with the chamber (150) to circulate a heated fluid at a first temperature through the chamber (150) such that the heated fluid flows through the chamber (150) at a flow rate of between six cubic meters per hour and eleven cubic meters per hour for a first period of time; and
at least partially curing the green tire (200) using the heated fluid flowing through the chamber (150).

7. The process of claim 6, wherein:
the first bead engaging projection (20) extends radially outward from a center mechanism (87) having a longitudinal axis; and
a second bead engaging projection (20) extends radially outward from the center mechanism (87);
and wherein the process comprises:
providing a first position where the first and second bead engaging projections (20) are adjacent one another on the center mechanism (87);
translating the first bead engaging projection (20) along the longitudinal axis of the center mechanism (87) toward the first tire bead (205) to engage at least the portion of the first bead engaging projection (20) with the first tire bead (205), and translating the second bead engaging projection (20) along the longitudinal axis of the center mechanism (87) toward the second tire bead (206) to engage at least the portion of the second bead engaging projection (20) with the second tire bead (206) such that the first and second bead engaging projections (20) are in a second position;
wherein in the second position, the seal is established about the circumference of the first and second tire beads (205, 206), respectively, and the chamber (150) is formed by the first and second bead engaging projections (30) and the inner surface (202) of the tire (200).

8. The process of claim 6 or 7, wherein the chamber (150) is fluidly sealed along each of the first tire bead (205) and the second tire bead (206).

9. The process of at least one of the claims 6 to 8, further comprising:
measuring a chamber temperature of the chamber (150) using at least one temperature sensor; and
causing the at least one pump to circulate the heated fluid at the first temperature through the chamber (150) such that the heated fluid flows through the chamber (150) at the flow rate of between six cubic meters per hour and eleven cubic meters per hour until the chamber temperature reaches a target temperature.

10. The process of at least one of the claims 6 to 9, wherein the target temperature is in a range of from 190 and 230 degrees Celsius; and/or wherein the first period of time is at least ten minutes.

11. A tire curing process comprising:
forming a chamber (150) defined by at least a portion of an inner surface (202) of a green tire (200) such that the chamber (150) is fluidly sealed;
causing at least one pump in fluid communication with the chamber (150) to circulate a heated inert gas through the chamber (150) such that the heated inert gas applies pressure against the inner surface (202) of the green tire (200);
causing the at least one pump to modify a flow rate of the heated inert gas through the chamber (150); and
at least partially curing the green tire (200) using the heated inert gas flowing through the chamber (150).

12. The process of claim 11, wherein the heated inert gas comprises at least one of nitrogen, neon, krypton, argon, xenon, or radon.

13. The process of claim 11 or 12, wherein causing that at least one pump to modify the flow rate of the heated inert gas through the chamber (150) comprises cutting off a flow of the heated inert gas through the chamber (150).

14. The process of at least one of the claims 11 to 13, further comprising:
measuring an internal chamber temperature of the green tire (200) using at least one temperature sensor; and
causing the at least one pump to modify the flow rate of the heated inert gas through the chamber (150) in response to measuring the internal chamber temperature to be a target temperature, the target temperature being preferably in a range of from 190 to 230 degrees Celsius.

15. The process of at least one of the claims 11 to 14, wherein causing the at least one pump to circulate the heated inert gas through the chamber (150) comprises:
(i) causing the at least one pump to circulate the heated inert gas at a first flow rate for at least four minutes or for at least ten minutes prior to causing the at least one pump to modify the flow rate of the heated inert gas through the chamber (150); and/or
(ii) causing the at least one pump to circulate the heated inert gas at a first flow rate for at least four minutes or for at least ten minutes prior to causing the at least one pump to modify the flow rate to a second flow rate that is greater than the first flow rate for at least ten minutes.
